# EUROPEAN PATENT SPECIFICATION

(11) **EP 0 770 797 B1**
(45) Date of publication and mention of the grant of the patent: **02.11.2000**
(21) Application number: 96112801.4
(22) Date of filing: 08.08.1996
(51) Int. Cl.: F16H 45/02

(54) **Hydraulic power transmission**
Hydraulischer Antrieb
Transmission hydraulique

(30) Priority: 24.10.1995 JP 29880495; 08.04.1996 JP 11054496
(43) Date of publication of application: 02.05.1997
(73) Proprietor: AISIN AW CO., LTD., Anjo-shi Aichi-ken (JP)
(72) Inventor: Tsukamoto, Kazumasa, Anjo-shi, Aichi-ken, 444-11 (JP); Hayabuchi, Masahiro, Anjo-shi, Aichi-ken, 444-11 (JP); Maeda, Koji, Anjo-shi, Aichi-ken, 444-11 (JP); Teraoka, Yutaka, Anjo-shi, Aichi-ken, 444-11 (JP); Yamaguchi, Makoto, Takefu-shi, Fukui-ken, 915 (JP)
(74) Representative: VOSSIUS & PARTNER

(56) References cited:
- DE-A- 4 433 256
- FR-A- 2 695 975
- FR-A- 2 706 967
- GB-A- 2 255 395
- US-A- 4 002 228
- US-A- 4 949 822

## Description

The present invention relates to a hydraulic power transmission for transmitting the power of an engine through a fluid to a transmission or the like and, more particularly, to a hydraulic power transmission having a damper mechanism and a direct-coupled clutch mechanism assembled therein as defined in the preamble of claim 1 and known from FR-A-2 695 975.

In the hydraulic power transmission having the direct-coupled clutch mechanism, this direct-coupled clutch mechanism is usually equipped with a damper mechanism for absorbing the fluctuation of the output torque of the engine, so that this fluctuation of the output torque may not be transmitted, when a direct-coupled clutch is directly applied, through the hydraulic power transmission to a mechanism such as a transmission which is connected to the power transmis sion line downstream of the direct-coupled clutch.

This arrangement of the spring of the damper mechanism is improved by a technique, as disclosed in U.S. Patent No. 5,377,796. According to this technique, the damper diameter is enlarged by arranging the damper spring (as exemplified by coil springs 20 and 21 recited in the Laid-Open, as will likewise be expressed by the terminology and reference numerals in the parenthesized forms) directly on the inner face of the outer circumference of a case portion (or a casing shell 7) of the torque converter, and the direct-coupled clutch is constructed of an output member (or a member 32) for supporting the damper spring and two pistons (or a piston 35 and a piston plate 36) arranged to hold the output member from the two sides. This direct-coupled clutch is applied/released by the differential pressure between the oil pressure acting upon the outer faces of the two pistons, i.e., the oil pressure circulating in the torque converter and the oil pressure which is fed through an oil passage (or a feed passage 48) to an oil chamber (or an annular chamber 47) between the two pistons and an output member thereby to act upon the inner faces of the two pistons. In other words, according to this clutch construction, the oil pressure of the circulating oil for the torque converter is always acting upon the outer sides of the pistons. When the oil pressure in the oil chamber is low, the two pistons clamp the output member from the two sides to bring the direct-coupled clutch into the applied state. When a sufficient oil pressure is fed to the oil chamber, on the other hand, the pistons are pushed outward by the oil pressure to bring the direct-coupled clutch into the released state.

In U.S. Patent No. 5,441,135, on the other hand, there is disclosed a torque converter of the type in which the means for applying/releasing the direct-coupled clutch is exemplified by a cylinder. A direct-coupled clutch (as likewise designated by 18) in this torque converter is composed of multi-disc frictional engagement elements (or friction discs 19 and 20), and a cylinder (or a power pressure cham ber 23) is formed in the boss (25) of a turbine (or a turbine wheel 8) connected to an output shaft (or a turbine wheel shaft 29). By the oil pressure fed to the cylinder, a piston (or an axial piston 22) and an elastic return lever (or a conversion lever 51) abutting against the piston are axially rotated to apply the clutch. Moreover, the cylinder is equipped with two seal rings (at the radially inner and outer sides) between it and the piston to enhance the liquid-tightness.

In recent years, the slip control of the direct-coupled clutch has been executed for reducing the power loss in the torque converter. For this slip control, it is necessary to hold the application pressure of the clutch at a predetermined level highly accurately. From this aspect, here will be reviewed the aforementioned techniques of the prior art. The oil chamber (or the annular chamber 47) of the former tech nique is sealed at its radially outer side by friction members (or friction linings 37 and 38) and at its radially inner side by seal rings (or O-rings 45 and 46). Despite of this construction, however, the friction members do not have a sufficient seal function so that the oil pressure steals into the coil chamber through a gap between the output member and the piston even at the application time of the direct-coupled clutch. As a result, the construction for effecting the sealing by the friction members, as described above, has found it difficult to control the application pressure in such a sufficient accuracy as to effect the slip control because it has a slow response to the change in the oil pressure.

According to the latter technique, on the other hand, there is attained an advantage that the sealing property of the cylinder (or the power pressure chamber 23) can be higher than that of the former technique. Despite of this advantage, however, a damper (or a torsional vibration attenuator 58) is arranged at the radially inner side of the direct-coupled clutch and is difficult to set a large diameter so that the ability of absorbing the torque fluctuation of the engine is restricted by itself, as compared with that of the former construction. As to the face of the application pressure of the clutch, moreover, the cylinder in the latter technique is arranged at the turbine side so that the centrifugal oil pressure in the cylinder is built up by the rotation of the turbine, but the centrifugal oil pressure in the case, i.e., outside of the cylinder is built up by the rotation of the case, i.e., the engine rotation. In this case, with the direct-coupled clutch being in the slip state, the rotation of the case is faster than that of the turbine so that the centrifugal oil pressure in the case exceeds that in the cylinder thereby to lower the application pressure of the direct-coupled clutch relatively to an extent corresponding to the excess of the centrifugal oil pressure in the case. As a result, the application pressure of the clutch cannot be sufficiently retained. It is therefore conceivable to arrange the cylinder at the case side. In this case, however, the construction to be adopted has to connect the damper to the turbine side so that the damper spring cannot be directly mounted on the case.

FR-A-2695975 discloses a hydraulic power transmission unit used with an engine of a vehicle which comprises a casing connected to the engine to be driven therefrom, a pump impeller arranged in the casing and connected thereto, a turbine runner connected to an output shaft, whereby the power of said engine is transmitted to the output shaft through a fluid contained in the casing, a damper mechanism including damper springs mounted directly on the inner face of the outer circumference of the casing and a damper disc transmitting the power of the engine to the output shaft through the damper springs and a direct-coupled clutch mechanism including a frictional engagement element arranged between the damper disc and the output shaft, a piston to apply or release the frictional engagement element selectively to establish a direct connection between the damper disc and the output shaft, and a cylinder.

US-4949822 discloses a torque converter assembly with reverse acting bypass clutch which has turbine and an impeller located in a converter housing and a lockup clutch construction in the converter housing that includes a one-piece stamped clutch and piston housing secured to the inner wall of the converter housing wherein the outer extremity of the stamped housing carries friction discs. An annular piston is located between the discs and the converter housing wherein the piston is stroked toward the turbine upon introduction of control pressure to a control chamber defined by the piston and the cylinder, the driven discs of the clutch being connected to a turbine shaft through a damper and the friction elements of the clutch being continuously exposed to circulating fluid within the converter wherein piston charge pressure is established without a requirement for continuous flow when the clutch is actuated.

It is, therefore, a first object of the present invention to provide a hydraulic power transmission in which the diameter of a damper is enlarged by mounting a damper spring directly on the inner face of the outer circumference of a casing, in which the cylinder of a direct-coupled clutch mechanism is made liquid-tight and in which the cylinder is rotated at the same speed as that of the casing by a single construction.

A second object of the present invention is to improve the positional accuracy of a frictional engagement element of the aforementioned direct-coupled clutch mechanism.

A third object of the present invention is to simplify an oil passage arrangement by partially sharing oil passages for feeding/releasing the oil pressure to and from the hydraulic power transmission.

A fourth object of the present invention is to retain a sufficient capacity for the feed/release oil passages while simplifying the oil passage arrangement by partially sharing the feed/release oil passages, as described above.

A fifth object of the present invention is to prevent the wear of the contacting faces between the piston and plate of the frictional engagement element in the aforementioned direct-coupled clutch mechanism by preventing the relative rotations of the plate and the piston.

A sixth object of the present invention is to improve the yield of materials when the damper disc of the aforementioned hydraulic power transmission is to be pressed.

A seventh object of the present invention is to reduce the number of parts while improving the material yield when the damper disc is to be pressed, as above.

An eighth object of the present invention is to enhance the cooling performance and retain the oil passage to the cylinder by improving the circulation of the oil in the aforementioned hydraulic power transmission.

The objects are achieved by the features of the claims.

According to the present invention, the damper spring is directly mounted on the inner face of the outer circumference of the casing so that the damper can be radially enlarged to absorb the torque fluctuation of the engine sufficiently at the application time of the direct-coupled clutch. On the other hand, the cylinder of the direct-coupled clutch is defined liquid-tight by the damper disc and the piston so that the application pressure for the slip control or the like can be controlled sufficiently accurately. On the other hand, the cylinder is constructed by the damper disc and can be rotated at a speed equivalent to that of the casing so that the centrifugal oil pressure to be established in the cylinder exceeds that to be established outside of the cylinder by the rotation of the turbine, thereby to retain the application force of the direct-coupled clutch. On the other hand, the member, as dedicated to the cylinder, can be eliminated to reduce the number of parts and simplify the construction.

According to the construction as set forth in claim 2, on the other hand, the damper disc is centrically supported on the output shaft so that the frictional engagement element can be positioned highly accurately. It is also possible to prevent the unbalance of the hydraulic power transmission.

Next, according to the construction as set forth in claim 3, no oil pressure is fed to the oil passage when the direct-coupled clutch is released, so that the oil pressure in the casing is released from the oil passage through the back flow preventing means thereby to circulate the oil through the hydraulic power transmission. At the clutch application time, on the other hand, the application pressure is fed via the oil passage to the inside of the cylinder so that the oil pressure in the casing and the application pressure are completely separated by the back flow preventing means. As a result, the feed/release of the clutch application pressure and the discharge of the circulating oil out of the casing can be effected by the single oil passage so that the construction of the oil passage can be prevented from becoming complicated.

According to the construction as set forth in claim 4, moreover, the output shaft is terminated in the damper disc to leave the axial space in the radially inner side of the damper disc, and the back flow preventing means is arranged in that space. As a result, this back flow preventing means can be given the opening diameter which is not restricted by the diameter of the output shaft, to retain a sufficient release of the oil pressure of the inside of the casing through the back flow preventing means so that the circulation of the oil for the high calorific value at the clutch release time can be improved to enhance the cooling performance.

According to the construction as set forth in claim 5, moreover, the plate of the frictional engagement element is connected to the damper disc, and the piston is equipped with the relative rotation regulating means for engaging with the plate, so that the relative rotations between the plate and the piston can be prevented. As a result, it is possible to prevent the establishment of the sliding resistance and the wear of the contacting faces, as might otherwise be caused by the relative rotations of the piston and the plate.

Next, according to the construction as set forth in claim 6, the cylinder having a simple pressed shape and the complicated damper cylinder are made separately of each other so that their individual materials can be efficiently used when the damper disc is to be pressed, thereby to improve the yield of the materials.

According to the construction as set forth in claim 7, moreover, the simply pressed cylinder and the plate of the frictional engagement element are united so that the number of parts can be reduced while improving the material yield when the damper disc is to be pressed.

According to the construction as set forth in claim 8, moreover, the oil circulation in the hydraulic power transmission can be improved to enhance the cooling performance and to retain the oil passage for the cylinder.

Other objects, features and advantages of the present invention will become apparent from the following description to be made with reference to the accompanying drawings, in which:

Fig. 1 is an axial section showing a hydraulic power transmission according to a first mode of embodiment of the present invention.

Fig. 2 is a transverse section, as taken from the inner face of the case, of the damper mechanism and the direct-coupled clutch mechanism of the hydraulic power transmission of the aforementioned mode of embodiment.

Fig. 3 is an axial section showing a hydraulic power transmission according to a second mode of embodiment of the present invention.

Fig. 4 is an axial section showing a hydraulic power transmission according to a third mode of embodiment of the present invention.

Fig. 5 is an axial section showing a portion of a hydraulic power transmission according to a fourth mode of embodiment of the present invention.

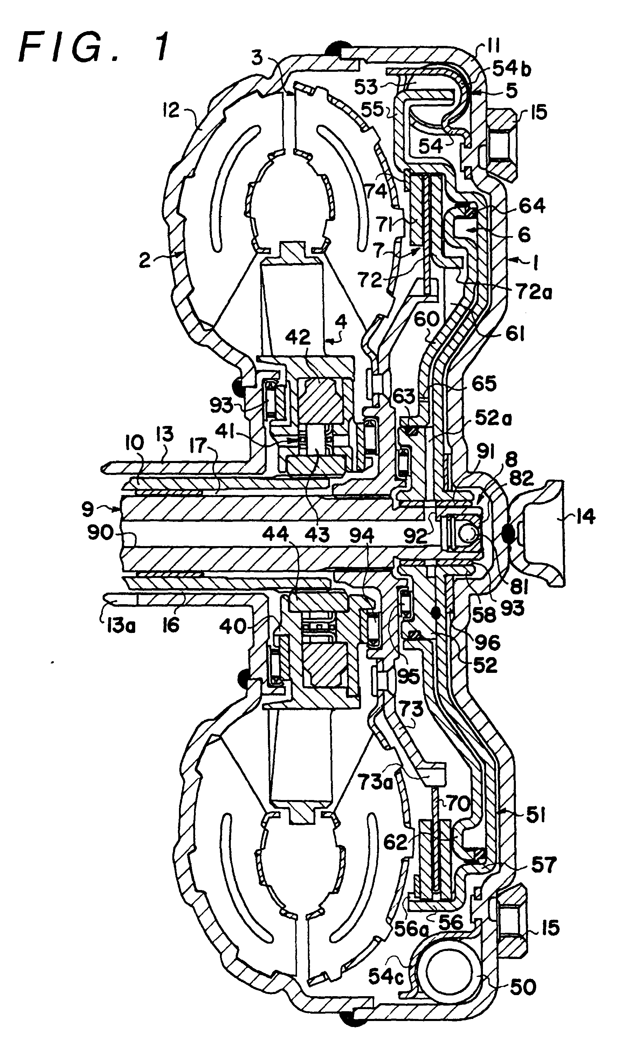

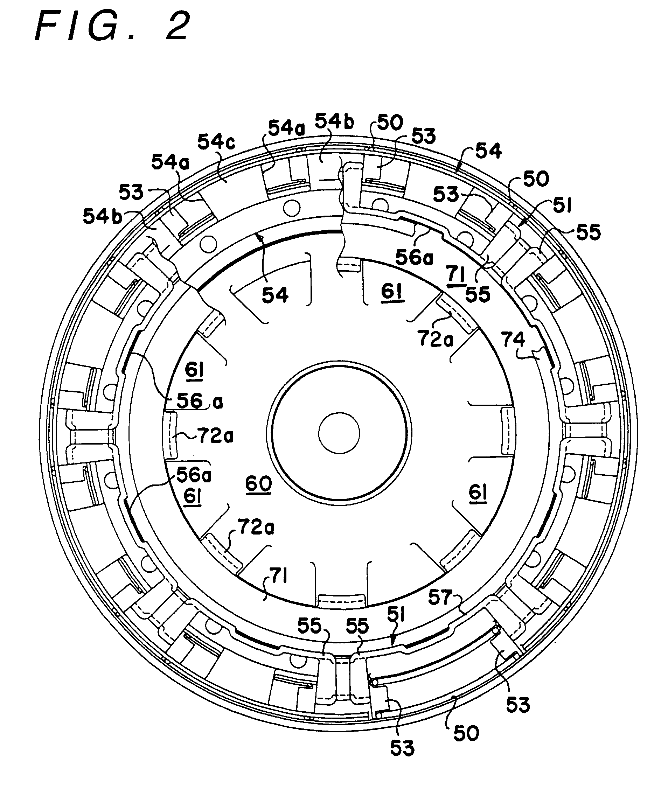

The present invention will be described in the following in connection with its modes of embodiment with reference to the accompanying drawings. First of all, here will be described the schematic construction of a first mode of embodiment. As shown in an axial section in Fig. 1 and in a transverse section in Fig. 2, this hydraulic power transmission is constructed to include: a casing 1 connected to the not-shown engine; a pump impeller 2 connected to the casing 1; and a turbine runner 3 connected to an output shaft 9. The hydraulic power transmission thus constructed adopts the shape of a torque converter for transmitting the power of the engine through a fluid to the output shaft 9. Thus, a stator 4 is arranged between the pump impeller 2 and the turbine runner 3.

This torque converter is equipped with: a damper mechanism 5 composed of a damper spring 50 mounted directly on the inner face of the outer circumference of the casing 1 and a damper disc 51 for transmitting the engine power through the damper spring 50 to the output shaft 9; a frictional engagement element 7 interposed between the damper disc 51 and the output shaft 9; and a direct-coupled clutch mechanism composed of a piston 60 for applying/releasing the frictional engagement element selectively, and a cylinder 6 defined liquid-tight by the piston 60 and the damper disc 51.

Especially in this torque converter, moreover, the damper disc 51 is supported by the output shaft 9. In this output shaft 9, on the other hand, there is formed an oil passage 90 having communications with the insides of the cylinder 6 and the casing 1. Between the oil passage 90 and the casing 1, there is arranged a check valve 8 having a check ball 81 as its valve member and acting as back flow preventing means for allowing the flow of working oil out of the casing 1 into the oil passage 90 but blocking the back flow. The frictional engagement element 7 adopts the shape of a wet type multi-disc clutch and is composed of pressure plates 71 and 72 connected to the damper disc 51, and a friction member 70 connected to the output shaft 9. The piston 60 is equipped with a rib 61 acting as relative rotation regulating means engaging with the pressure plate 72 to regulate the relative rotation of the same.

Here will be sequentially described the detailed constructions of the individual portions. First of all, the casing 1 is composed of: a drum-shaped clutch case portion 11 mounted on the drive plate which is fixed on the crankshaft of the engine; a bell-shaped torque converter case portion 12 providing an outer shell for the pump impeller 2; and a boss portion 13 acting as both a support shaft in the not-shown transmission case and a joint member to an oil pump. These components are constructed by uniting the pressed ones by the welding. In the drawing: reference numeral 14 designates a center piece to be fitted in the crankshaft bore for centering the torque converter with respect to the crankshaft; numeral 15 a screw seat for a mounting bolt on the drive plate; and numeral 13a a spline for driving connection to the rotor of the not-shown oil pump.

The pump impeller 2, the turbine runner 3 and the stator 4 are not especially different from those of the prior art, and their own constructions will not be described. As to their arrangement, however, the radially inner side of the turbine runner 3 is riveted to the clutch hub 73 of the direct-coupled mechanism. On the other hand, the boss portion of the stator 4 is rotatably supported by an inner race 44 while enveloping the outer race 42 of a one-way clutch 41 and a sprag 43, and the inner race 44 is so splined to a support shaft 10 extending from the support of the not-shown transmission case that it does not rotate.

Next, the output shaft 9 has the aforementioned oil passage 90 which extends in the axial direction thereof. The leading end of the output shaft 9 is radially reduced so that the hub 73 engages with the outer circumference spline adjoining to its radially smaller portion 91. To the leading end of the oil passage 90, there is caulked the aforementioned check valve 8. This check valve 8 is composed of the check ball 81 and its seat 82 and is arranged to have the check ball 81 at the side of the oil passage 90 and the valve port of the seat 82 at the side of the casing. In the radially smaller portion 91 of the output shaft 9, there is formed a radial oil passage 92. This oil passage 92 has communication with the cylinder 6 by way of an oil passage 52a which extends radially in a thick hub 52 welded to the damper disc 51.

Next, the damper mechanism is constructed, as especially seen from Fig. 2, of: the damper spring 50 composed of eight compression coil springs; spring seats 53 fitted on the two ends of each spring 50; a spring support member 54 made of an annular sheet and caulked at its radially inner side to the projections of the case portion 11; and the damper disc 51 made of a sheet and supported rotatably by the radially smaller portion 91 of the output shaft 9 through a bushing 93. The spring support member 54 is warped at one side toward the case portion 11 and at the other away from the case portion 11 across apertures 54a, as formed substantially equidistantly in the circumferential direction, so that the portion 54b, as warped toward the case portion 11, is held in abutment against the end faces of the adjoining spring seats 53 thereby to support the two ends of the spring 50 circumferentially and axially and so that the portion 54c, as warped away from the case portion 11, supports the circumference of the spring 50 radially. On the other hand, the damper disc 51 is arranged such that an abutment portion 55 bulging radially from the drum-shaped body is inserted into the forward warped portion 54b of the spring support member 54, so far as its two ends abut against the individual end portions of the adjoining damper springs 50 through the spring seats 53 fitted in those end portions. In the damper disc 51, a radially larger drum portion 56 and a radially smaller cylinder outer circumference portion 57 are formed by bending the body at two stages in the axial direction, to provide an axial support portion 58 at the innermost axially bent portion.

Next, the direct-coupled clutch mechanism is constructed of: the frictional engagement element 7 using the radially larger drum portion 56 of the damper disc 51 as its clutch drum and the hub 73 or the turbine hub splined to the output shaft 9 as its clutch hub and composed of the paired pressure plates 71 and 72 having outer circumference splines engaging with the inner circumference spline 56a of the drum portion 56 and the friction member 70 having an inner circumference spline engaging with the outer circumference spline 73a of the hub 73; and the cylinder 6 enclosed at its one end face and outer circumference by the damper disc 51, at its inner circumference by the hub 52 integrated with the former and at its other end face by the piston 60 fitted slidably at its radially inner side in the outer circumference of the hub 52. The radially inner side of the pressure plate 72, as confronting the push face 62 of the piston 60, is extended and bent at its eight circumference portions to form engagement pawls 72a, which are fitted between the eight reinforcing circumference ribs 61 for improving the rigidity of the piston 60 made of a sheet, to prevent the piston 60 from rotating relative to the pressure plate 72. The piston 60 is constructed by bending an annular sheet to have an S-shaped section and encloses the cylinder 6 liquid-tight by supporting its radially inner side supported slidably on the outer circumference of the hub portion 52, by sealing its sliding portion by an O-ring 63, and by sealing its radially outer side at its sliding portion with the cylinder outer circumference portion 57 by a seal ring 64 fitted in its leading end. In the piston 60, moreover, there is formed a radially small orifice 65 which is adjacent to the axially bent portion of the radially inner side of the piston 60 to provide communication between the inside and outside of the cylinder 6.

Moreover, roller bearings 93, 94 and 95 are individually sandwiched between the boss portion 40 of the stator 4 and the boss portion 13 of the case, between the boss portion 40 and the hub 73 and between the hub 73 and the hub 52, and a thrust washer 96 is sandwiched between the damper disc 51 and the case portion 11. These components perform a function to allow the thrust force acting upon the turbine runner 3 and the stator 4 by the fluid coupling to be supported by the casing 1. Incidentally, as to the direct-coupling clutch mechanism, the hydraulic pushing force to be applied to the back of the piston 60 at the clutch applying time is exerted upon the damper disc 51 through the pressure plate 72, the friction member 70, the pressure plate 71 and a stop ring 74, and the reaction against the pushing force of the piston 60 is exerted backward upon the damper disc 51 so that the closed loop of the thrust force is established to generate none of the unbalance force which might otherwise move the damper disc 51 in the axial direction.

In the torque converter thus constructed, the rotation of the crankshaft of the engine is transmitted on one hand through the casing 1 to the pump impeller 2 and on the other hand through the spring support member 54 to the damper spring 50, the damper disc 51, the pressure plate 72 and the piston 60. In the run, moreover, the inside of the casing 1 of the torque converter is fed at all times with the oil for the torque transmission through the fluid from an annular oil passage 16 between the boss portion 13 and the support shaft 10, and this oil is further fed via the oil passage formed in the boss portion 40 of the stator 4 to the hydraulic transmission space which is defined by the pump impeller 2, the turbine runner 3 and the stator 4, until it fills up the inside of the casing 1.

Moreover, the pressure (for releasing the clutch) of the oil thus fed is a secondary pressure, i.e., a pressure regulated by a secondary regulator valve to a lower pressure from the line pressure which is regulated by a primary regulator valve of the automatic transmission so that it may be fed to the individual hydraulic servos. For the clutch application, the check ball 81 of the check valve 8 is brought away from its seat to release the oil to the oil passage 90 thereby to effect its circulation through the torque converter, when the clutch applying pressure (as substantially equal to the aforementioned secondary pressure) to be fed only at the clutch application through a lockup control valve or the like from the oil passage 90, that is, when the oil passage 90 is drained through the cooler or the like. In this state, the piston 60 is pushed back by the aforementioned clutch releasing pressure to disengage the frictional engagement element 7 so that the direct-coupled clutch is released. At this time, as well known in the art, the engine torque, as transmitted to the casing 1, is further transmitted from the pump impeller 2 through the fluid to the turbine runner 3 and further through the hub 73 to the output shaft 9. The torque fluctuation of the engine in this case is damped, while it is transmitted through the fluid, so that it is transmitted as the torque whose torsional vibration is attenuated, to the output shaft 9.

At the application time or slip control time of the direct-coupled clutch, on the other hand, the clutch application pressure is fed to the oil passage 90 under the control of the lockup control valve or the like, and the check ball 81 of the check valve 8 is seated to shut the leading end of the oil passage 90 so that the clutch application pressure or secondary pressure, as fed to the oil passage 90, or the regulated oil pressure, as based on the former, is fed through the oil passage 52a to the inside of the cylinder 6. As a result, this fed pressure in the cylinder 6 is the sum of the action of the centrifugal oil pressure, as established by the rotation of the cylinder, so that it exceeds the pressure in the casing 1 to push out the piston 60. As a result, the piston 60 is forced out to clamp the friction member 70 between the pressure plates 71 and 72 so that the torque transmission by the frictional engagement element 7 is effected in parallel with the aforementioned fluid transmission by the torque converter.

In this lockup or lockup slip state, the engine torque, as transmitted to the spring support member 54 united with the casing 1, is transmitted from each portion 54b to one end of each damper spring 50 so that its fluctuation is absorbed by the elastic compression or deformation of each damper spring 50, and is transmitted as the torsional vibration attenuated rotation to the damper disc 51 so that it is transmitted through the pressure plates 71 and 72, the friction member 70 and the hub 73 to the output shaft 9. Incidentally, in this lockup state or lockup slip state, the check ball 81 is pushed onto the seat 82 by the oil pressure in the oil passage 90 to shut the valve port, as described above, thereby to block the direct feed of the clutch application pressure of the oil passage 90 into the casing 1 but to allow the limited outflow of the clutch application pressure into the casing 1 through the restricted orifice 65. As a result, the oil in the casing 1 can be released via a lubrication oil passage, and the oil circulation through the torque converter is also effected in this case to prevent the rise in the oil temperature in the torque converter, which might otherwise be caused by the confinement of the oil in the cylinder 6 and the casing 1.

In the torque converter thus far described in detail, the damper spring 50 is directly mounted on the inner face of the outer circumference of the casing 1 so that the damper can be set to have the large diameter thereby to absorb the torque fluctuation of the engine sufficiently at the application time of the direct-coupled clutch. Moreover, the cylinder 6 of the direct-coupled clutch mechanism is constructed of the damper disc 51 and the piston 60 to establish a high liquid-tightness by the seal member arranged inbetween so that the application pressure for the slip control can be controlled sufficiently accurately. Still moreover, the cylinder 6 is constructed of the damper disc 51 and rotated at the same speed (or input r.p.m.) as that of the casing 1 so that the centrifugal oil pressure in the cylinder 6 is higher than the centrifugal oil pressure, as generated outside of the cylinder 6 by the rotation (or output rotation) of the turbine runner 3 thereby to retain the application force of the direct-coupled clutch especially at the shift time from the released state to the applied state and at the lockup slip control time. Thanks to the cylinder arrangement making use of the damper disc 51, on the other hand, the parts especially for the cylinder can be eliminated to reduce the number of parts thereby to provide a simple construction.

On the other hand, the damper disc 51 is centrically supported on the output shaft 9 so that the positioning accuracy of the frictional engagement element 7 is improved. In addition, the hub 73 acting as the two hubs for the turbine runner and the clutch and the clutch drum portion 56, as united with the damper disc 51, are supported on the common output shaft 9 so that the unbalance of the entire torque converter can be reduced. In addition, there is adopted the construction in which the internal pressure of the torque converter and the application pressure are completely separated by the check ball 81 so that the feed/release of the clutch application pressure and the circulation of the oil to the inside of the casing 1 can be effected by way of the single oil passage 90 thereby to avoid the complicated oil passage construction. Moreover, the relative rotation between the pressure plate 72 and the piston 60 is prevented by retaining the pawl 72a of the pressure plate 72 on the rib 61 formed on the piston 60, so that the increase in the rotational resistance resulting from their sliding motions and the wear of their contacting faces can be prevented.

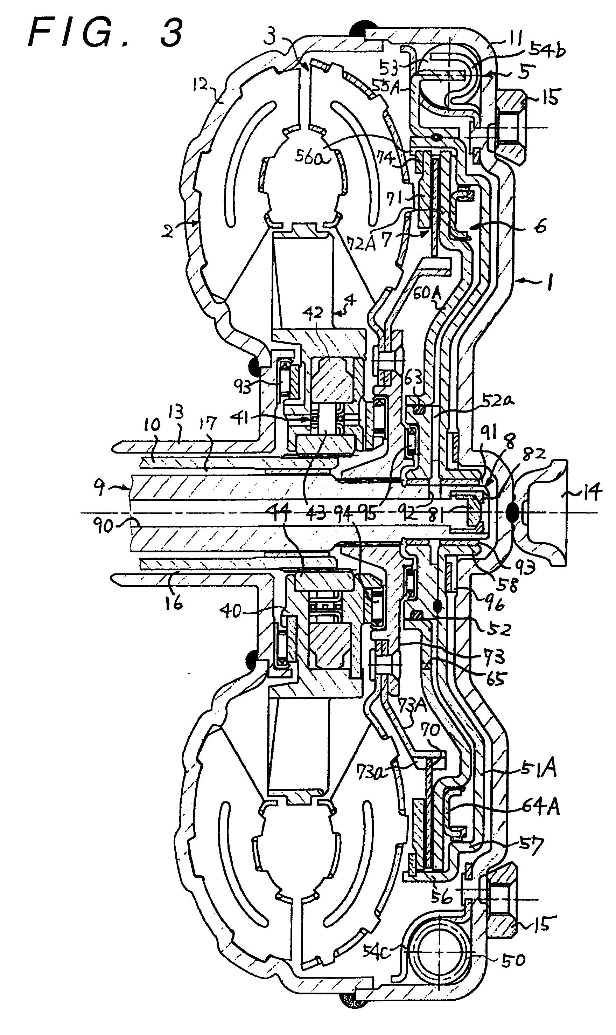

Next, Fig. 3 shows a second mode of embodiment of the present invention. Incidentally, as to substantially the same portions as those of the first mode of embodiment, the description will be omitted by designating them by the similar reference numerals and will be directed to only the differences. Although the piston 60 and the pressure plate 72 are made separate in the foregoing mode to engage with each other irrotationally of each other, a piston 60A and a pressure plate 72A are united in the present mode. In the foregoing more, on the other hand, the abutment portion 55 is united with the damper disc 51, whereas the abutment portion is made of a separate damper plate 55A and is divided from a damper disc 51A, and these components are welded to each other at the clutch drum portion 56. Since, moreover, the piston 60A is united with the pressure plate 72A, the seal ring 64 is replaced by an annular seal piston 64A. This seal piston 64A is made of a member having a C-shaped section fitting elastic seal rings individually on its inner and outer circumferences, such that the inner circumference seal is slidably supported on the outer cylindrical face of the piston 60A whereas the outer circumference seal is slidably supported on the cylinder outer circumference 57 of the damper disc 51A.

In this mode, the valve member 81 of the check valve 8 is formed into not the ball shape but a poppet shape but is not especially different in the function from the foregoing mode. Moreover, a clutch hub member 73A, as formed with the outer circumference spline 73a for supporting the frictional member 70, is made separate from the turbine hub 73 and is riveted to the turbine hub 73 together with the shell of the turbine runner 3. This construction is not especially different in function from that of the first mode of embodiment, but the outer circumference spline 73a is extended to bite into the piston 60A to such an extent that the rib 61 for regulating the relative rotation need not be formed on the piston 60 unlike the foregoing mode, so that the rigidity as the member can be enhanced. This aims at simplification of the machining of the turbine hub 73 by making the hub member 73A of a thinned and lightened separate pressed article and by simplifying the shape of the forged turbine hub 73.

If this second mode of embodiment is adopted, the abutment portion 55A having the complicated shape need not be integrally formed at the outer circumference of the damper disc 51A having a large diameter, when this damper disc 51A is made of the pressed article, but can be separately pressed as the eight circumferentially divided small parts, as seen from Fig. 2 showing the abutment portion constructed likewise accord ing to the first mode of embodiment. Thus, it is possible to improve the individual material yields of the damper disc 51A and the abutment portion 55A drastically. Moreover, the number of parts can be reduced by uniting the piston 60A and the pressure plate 72A.

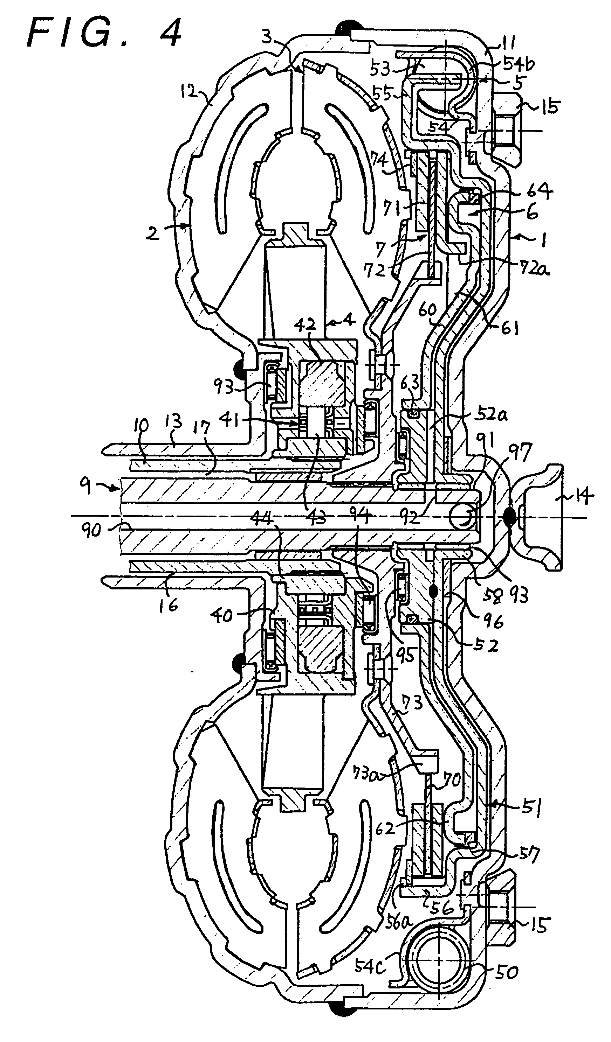

Next, Fig. 4 shows a third mode of embodiment of the present invention. This mode is substantially similar in the mechanical portion to that of the first mode of embodiment and is different mainly in the oil passage arrangement. In this mode, too, the corresponding portions will not be described by designating them by the similar reference numerals, and the description will be directed to only the differences. In this case, the annular oil passages 16 and 17 for circulating the oil through the inside of the casing 1 are formed between the outer circumference of the support shaft 10 supporting the stator 4 through the inner race 44 of the one-way clutch and the inner circumference of the boss portion 13 of the casing 1 and between the inner circumference of the support shaft 10 and the outer circumference of the output shaft 9. In this mode, the annular oil passage 16 is at the feed side at the lockup clutch release time whereas the annular oil passage 17 is at the return side. At the lockup and lockup slip time, both the annular oil passages 16 and 17 are at the return side.

As the oil circulating especial oil passage in the torque converter is thus formed, the leading end of the oil passage 90, as formed in the output shaft 9, is plugged by fitting a ball 97 and is isolated from the inside of the casing 1 when it communicates with the inside of the cylinder 6 via the oil passage 92 and the oil passage 52a. In this mode, therefore, the oil passage 90 acts as an especial oil passage for feeding/releasing the clutch servo pressure oil into and out of the cylinder 6.

If this mode is adopted, the capacity of the oil passage at the side to feed the oil into the casing 1 can be sufficiently more taken at the lockup time or lockup slip time than that of the first mode of embodiment so that the circulation efficiency of the oil through the torque converter can be raised to enhance the cooling performance by the heat exchange through the oil cooler. On the other hand, the oil passages for feeding/releasing the oil into and out of the cylinder 6 are retained as in the first mode of embodiment.

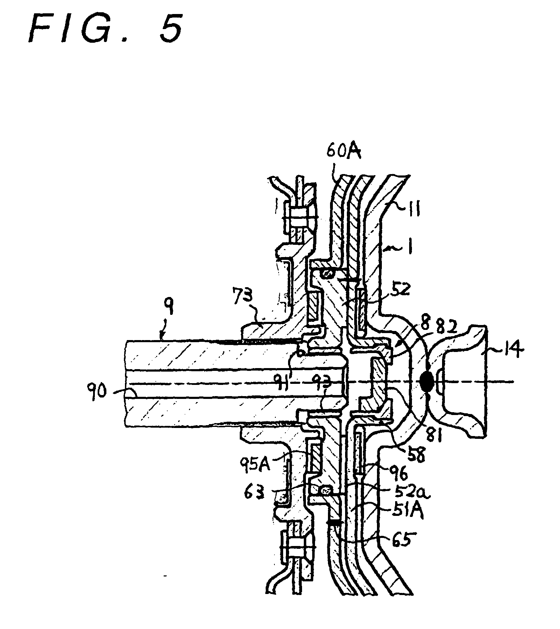

Next, Fig. 5 shows a fourth mode of embodiment of the present invention. In this mode, the construction of the vicinity of the check valve 8 of the foregoing second mode of embodiment is modified. In this mode, therefore, the portions corresponding to those of the second mode of embodiment will not be described by designating them by similar reference numerals, and the following description is directed to only the differences. In this case, the output shaft 9 terminates in the damper disc 51A while leaving an axial space radially inside of the damper disc 51A, and the check valve 8 is so arranged in the axial space that it is fixed on the damper disc 51A. Specifically, the output shaft 9 terminates in the vicinity of the joint face between the hub 52 and the damper disc 51A. As a result, the oil passage 90 is axially opened in the terminal portion and communicates with the oil passage 52a of the hub 52 through the axial space at the end of the output shaft 9. In accordance with this, the seat 82 of the check valve 8 is caulked to the inner circumference of the axially bent portion 58, as located at the innermost side of the damper disc 51A. In this mode, moreover, the valve member 81 of the check valve 8 is given the same poppet shape as that of the second mode of embodiment but is made radially larger together with the opening diameter of the seat 82. The remaining difference is that the hub 52 and the turbine hub 73 are supported by a thrust washer 95A having an oil groove. Despite of this difference, however, the function to support the thrust force is not especially different from that of the roller bearing 95 of the second mode of embodiment.

If there is adopted the construction in which the axial end of the output shaft 9 is shortened, the opening diameter of the check valve 8 can be freely set without being restricted by the diameter of the output shaft 9. The centering of the damper disc 51A of this case is effected without any trouble by supporting the hub 52, as welded to the damper disc 51A, on the radially reduced portion 91 of the output shaft 9 through the axially shortened bushing 93.

If this mode is adopted, the return capacity of the oil out of the casing 1 to the oil passage 90 can be made larger than that of the second mode of embodiment. As a result, in the case of a high calorific value due to the slip of fluid between the pump impeller and the turbine runner at the lockup release time, the circulation efficiency of the oil through the torque converter can be improved to enhance the cooling performance by the heat exchange through the oil cooler. On the other hand, the oil passage for feeding/releasing the oil to and from the inside of the cylinder 6 is retained as in the second mode of embodiment by the axial communication between the oil passage 90 and the oil passage 52a.

Although the present invention has been described in detail in connection with its four modes of embodiment, it should not be limited to their disclosed contents but can naturally be practiced by modifying the specific construction of the details in various manners within the scopes of the individual items of the claim and their combination.

## Claims

1. A hydraulic power transmission comprising: a casing (1) connected to an engine; a pump (2) arranged in said casing and connected to said casing; and a turbine (3) connected to an output shaft (9), whereby the power of said engine is transmitted to said output shaft through a fluid in said casing (1);
a damper mechanism (5) including a damper spring (50) mounted directly on the inner face of the outer circumference of said casing (1), and a damper disc (51) for transmitting the power of said engine to said output shaft (9) through said damper spring (50);
a direct-coupled clutch mechanism including a frictional engagement element (7) arranged between said damper disc (51) and said output shaft (9), a slidable piston (60;60A) for applying/releasing said frictional engagement element selectively to establish a direct connection or a disconnection between said damper disc and said output shaft, and a cylinder (6);
characterized in that
said piston (60) is slidably mounted in said cylinder; and
said cylinder (6) is enclosed liquid-tight by said piston and said damper disc.

2. A hydraulic power transmission as set forth in claim 1, wherein said damper disc (51) is supported on said output shaft (9).

3. A hydraulic power transmission as set forth in claim 1 or 2, wherein an oil passage (90) is formed in said output shaft (9) and has communications with said cylinder (6) and the inside of said casing (1) and wherein back flow preventing means (8, 81) is arranged between said oil passage (90) and the inside of said casing (1) for allowing the flow of a fluid from the inside of said casing (1) to said oil passage (90) but for blocking the back flow of the same.

4. A hydraulic power transmission as set forth in claim 3, wherein said output shaft (9) terminates in said damper disc (51) while leaving an axial space at the radially inner side of said damper disc (51), and wherein said back flow preventing means (8, 81) is arranged in said axial space and fixed on said damper disc (51).

5. A hydraulic power transmission as set forth in claim 1 or 2,
wherein said frictional engagement element (7) has a plate (72) connected to said damper disc, and a friction member (70) connected to said output shaft (9), and
wherein said piston has relative rotation regulating means (61) engaging with said plate (72).

6. A hydraulic power transmission as set forth in any of the claims 1 to 4, wherein said damper disc (51) is constructed by fixing an annular cylinder, in which said piston is fitted, and a damper plate, against which said spring abuts, to each other.

7. A hydraulic power transmission as set forth in claims 1, 2, 3, 4 or 6, wherein said frictional engagement element (7) has a plate (72A) connected to said damper disc (51), and a friction member (70) connected to said output shaft (9), and wherein said piston (60A) is formed integrally with said plate (72A).

8. A hydraulic power transmission as set forth in claims 1, 2, 5, 6 or 7, further comprising a stator (4), wherein oil passages (16, 17) for circulating the oil through the inside of said casing (1) are formed between a support shaft (10) of said stator (4) and said casing (1) and between said support shaft (10) and said output shaft (9), and wherein an oil passage (92) for feeding/releasing the oil to actuate said piston (60; 60A) is so formed in said output shaft (9) as to communicate with the inside of said cylinder (6).

## Patentansprüche

1. Hydraulische Kraftübertragungsvorrichtung mit:
einem mit einem Motor verbundenen Gehäuse (1); einer im Gehäuse angeordneten und mit dem Gehäuse verbundenen Pumpe (2); und einer mit einer Ausgangswelle (9) verbundenen Turbine (3), wobei die Leistung des Motors über ein Fluid im Gehäuse (1) zur Ausgangswelle übertragen wird;
einem Dämpfungsmechanismus (5) mit einer direkt auf der Innenfläche des Außenumfangs des Gehäuses (1) angeordneten Dämpfungsfeder (50) und einer Dämpfungsscheibe (51) zum Übertragen der Motorleistung über die Dämpfungsfeder (50) zur Ausgangswelle (9);
einem direkten Kupplungsmechanismus mit einem zwischen der Dämpfungsscheibe (51) und der Ausgangswelle (9) angeordneten Reibungseingriffselement (7), einem verschiebbaren Kolben (60; 60A) zum selektiven Ein-/Ausrücken des Reibungseingriffselements, um eine direkte Verbindung zwischen der Dämpfungsscheibe und der Ausgangswelle herzustellen bzw. zu trennen, und einem Zylinder (6);
dadurch gekennzeichnet, daß
der Kolben (60) im Zylinder verschiebbar angeordnet ist; und
der Zylinder (6) durch den Kolben und die Dämpfungsscheibe flüssigkeitsdicht abgeschlossen ist.

2. Hydraulische Kraftübertragungsvorrichtung nach Anspruch 1, wobei die Dämpfungsscheibe (51) auf der Ausgangswelle (9) gehalten wird.

3. Hydraulische Kraftübertragungsvorrichtung nach Anspruch 1 oder 2, wobei in der Ausgangswelle (9) ein Ölkanal (90) ausgebildet ist, der mit dem Zylinder (6) und dem Innenraum des Gehäuses (1) kommuniziert, und wobei eine Rückflußblockiereinrichtung (8, 81) zwischen dem Ölkanal (90) und dem Innenraum des Gehäuses (1) angeordnet ist, um die Strömung eines Fluids vom Innenraum des Gehäuses (1) zum Ölkanal (90) zu ermöglichen, den Rückfluß dieses Fluids jedoch zu blockieren.

4. Hydraulische Kraftübertragungsvorrichtung nach Anspruch 3, wobei die Ausgangswelle (9) in der Dämpfungsscheibe (51) endet, während an der radial inneren Seite der Dämpfungsscheibe (51) ein axialer Raum bereitgestellt wird, und wobei die Rückflußblockiereinrichtung (8, 81) in dem axialen Raum angeordnet und an der Dämpfungsscheibe (51) befestigt ist.

5. Hydraulische Kraftübertragungsvorrichtung nach Anspruch 1 oder 2,
wobei das Reibungseingriffselement (7) eine mit der Dämpfungsscheibe verbundene Platte (72) und ein mit der Ausgangswelle (9) verbundenes Reibungselement (70) aufweist; und
wobei der Kolben eine mit der Platte (72) in Eingriff bringbare Relativdrehbewegungssteuerungseinrichtung (61) aufweist.

6. Hydraulische Kraftübertragungsvorrichtung nach einem der Ansprüche 1 bis 4, wobei die Dämpfungsscheibe (51) so konstruiert ist, daß ein ringförmiger Zylinder, in dem der Kolben eingepaßt ist, und eine Dämpfungsplatte, an der die Feder anliegt, aneinander befestigt sind.

7. Hydraulische Kraftübertragungsvorrichtung nach Anspruch 1, 2, 3, 4 oder 6, wobei das Reibungseingriffselement (7) aufweist: eine mit der Dämpfungsscheibe (51) verbundene Platte (72A) und ein mit der Ausgangswelle (9) verbundenes Reibungselement (70), und wobei der Kolben (60A) mit der Platte (72A) einstückig ausgebildet ist.

8. Hydraulische Kraftübertragungsvorrichtung nach Anspruch 1, 2, 5, 6 oder 7, ferner mit einem Stator (4), wobei Ölkanäle (16, 17) für eine Ölzirkulation durch den Innenraum des Gehäuses (1) zwischen einer Haltewelle (10) des Stators (4) und dem Gehäuse (1) und zwischen der Haltewelle (10) und der Ausgangswelle (9) ausgebildet sind, und wobei ein Ölkanal (92) zum Zuführen/Ableiten des Öls zum Betätigen des Kolbens (60; 60A) so in der Ausgangswelle (9) ausgebildet ist, daß er mit dem Innenraum des Zylinders (6) kommuniziert.

## Revendications

1. Transmission hydraulique, comprenant: un carter (1) relié à un moteur; une pompe (2) disposée dans ledit carter et reliée audit carter; et une turbine (3) reliée à un arbre (9) de sortie, grâce à quoi la puissance dudit moteur est transmise audit arbre de sortie par l'intermédiaire d'un fluide présent dans ledit carter (1);
un mécanisme d'amortissement (5) comprenant un ressort d'amortissement (50) monté directement sur la face interne du pourtour extérieur dudit carter (1), et un disque d'amortissement (51) servant à transmettre la puissance dudit moteur audit arbre de sortie (9) par l'intermédiaire dudit ressort d'amortissement (50);
un mécanisme d'embrayage à couplage direct comprenant un élément d'accouplement à friction (7) disposé entre ledit disque d'amortissement (51) et ledit arbre (9) de sortie, un piston coulissant (60; 60A) pour appliquer/relâcher d'une manière sélective ledit élément d'accouplement à friction afin d'établir ou d'interrompre un couplage direct entre ledit disque d'amortissement et ledit arbre de sortie, et un cylindre (6);
caractérisée en ce que ledit piston (60) est monté de manière à pouvoir coulisser dans ledit cylindre; et
ledit cylindre (6) est enfermé d'une manière étanche aux liquides par ledit piston et ledit disque d'amortissement.

2. Transmission hydraulique selon la revendication 1, dans laquelle ledit disque d'amortissement (51) est supporté sur ledit arbre (9) de sortie.

3. Transmission hydraulique selon la revendication 1 ou 2, dans laquelle un passage (90) d'huile est formé dans ledit arbre (9) de sortie et a des communications avec ledit cylindre (6) et avec l'intérieur dudit carter (1), et dans laquelle un moyen de prévention (8, 81) de reflux est disposé entre ledit passage (90) d'huile et l'intérieur dudit carter (1) pour permettre l'écoulement d'un fluide depuis l'intérieur dudit carter (1) vers ledit passage (90) d'huile mais pour empêcher le reflux de celui-ci.

4. Transmission hydraulique selon la revendication 3, dans laquelle ledit arbre (9) de sortie aboutit dans ledit disque d'amortissement (51) tout en laissant un espace axial au niveau de la face radialement interne dudit disque d'amortissement (51), et dans laquelle ledit moyen de prévention (8. 81) de reflux est disposé dans ledit espace axial et est fixé sur ledit disque d'amortissement (51).

5. Transmission hydraulique selon la revendication 1 ou 2,
dans laquelle ledit élément d'accouplement à friction (7) a une plaque (72) reliée audit disque d'amortissement, et un élément (70) à friction relié audit arbre (9) de sortie, et
dans laquelle ledit piston a un moyen de régulation (61) de rotation relative coopérant avec ladite plaque (72).

6. Transmission hydraulique selon l'une quelconque des revendications 1 à 4, dans laquelle ledit disque d'amortissement (51) est construit en fixant l'un à l'autre un cylindre annulaire, dans lequel ledit piston est installé, et une plaque d'amortissement contre laquelle bute ledit ressort.

7. Transmission hydraulique selon les revendications 1, 2, 3, 4 ou 6, dans laquelle ledit élément d'accouplement à friction (7) a une plaque (72A) reliée audit disque d'amortissement (51), et un élément (70) à friction relié audit arbre (9) de sortie, et dans laquelle ledit piston (60A) fait corps avec ladite plaque (72A).

8. Transmission hydraulique selon les revendications 1, 2, 5, 6 ou 7, comprenant en outre un stator (4), dans laquelle des passages (16, 17) d'huile pour faire circuler de l'huile à travers l'intérieur dudit carter (1) sont formés entre un arbre de support (10) dudit stator (4) et ledit carter (1) et entre ledit arbre de support (10) et ledit arbre (9) de sortie, et dans laquelle un passage (92) d'huile pour fournir/libérer l'huile afin d'actionner ledit piston (60; 60A) est formé dans ledit arbre (9) de sortie de manière à communiquer avec l'intérieur dudit cylindre (6).
